# EUROPEAN PATENT SPECIFICATION

(11) **EP 3 883 257 B1**
(45) Date of publication and mention of the grant of the patent: **06.09.2023**
(21) Application number: 19883898.9
(22) Date of filing: 14.11.2019
(51) Int. Cl.: H04Q 11/00

(54) **DATA COMMUNICATION AND COMMUNICATION MANAGEMENT METHOD BASED ON DISTRIBUTED PROCESSING UNIT (DPU) AND DPU**
DATENKOMMUNIKATIONS- UND KOMMUNIKATIONSVERWALTUNGSVERFAHREN AUF BASIS EINER VERTEILTEN VERARBEITUNGSEINHEIT (DPU) SOWIE DPU
PROCÉDÉ DE GESTION DE COMMUNICATION ET DE COMMUNICATION DE DONNÉES SUR LA BASE D'UNE UNITÉ DE TRAITEMENT DISTRIBUÉE (DPU) ET DPU

(30) Priority: 14.11.2018 CN 201811355309
(43) Date of publication of application: 22.09.2021
(73) Proprietor: ZTE Corporation, shenzhen Guangdong 518057 (CN)
(72) Inventor: LU, Liuming, Shenzhen, Guangdong 518057 (CN); XU, Xiaodong, Shenzhen, Guangdong 518057 (CN); WEI, Qi, Shenzhen, Guangdong 518057 (CN); WANG, Shuoyi, Shenzhen, Guangdong 518057 (CN)
(74) Representative: Regimbeau
(86) International application number: PCT/CN2019/118503
(87) International publication number: WO 2020/098744

(56) References cited:
- WO-A1-2013/086808
- CN-A- 104 969 590
- CN-A- 105 790 986
- CN-A- 105 790 986
- CN-A- 106 972 946
- Forum Broadband: "Architecture and Requirements for Fiber to the Distribution Point", Technical Report, TR -301, 1 August 2015 (2015-08-01), XP055471493, Retrieved from the Internet: URL:www.broadband-forum.org [retrieved on 2018-04-30]

## Description

### TECHNICAL FIELD

Embodiments of the present disclosure relate to, but are not limited to, data communication technologies of an access network, and in particular relate to, a data communication method and a communication management method based on a distribution point unit, DPU, of an office equipment and a DPU, which may be applicable to a copper cable access system.

### BACKGROUND

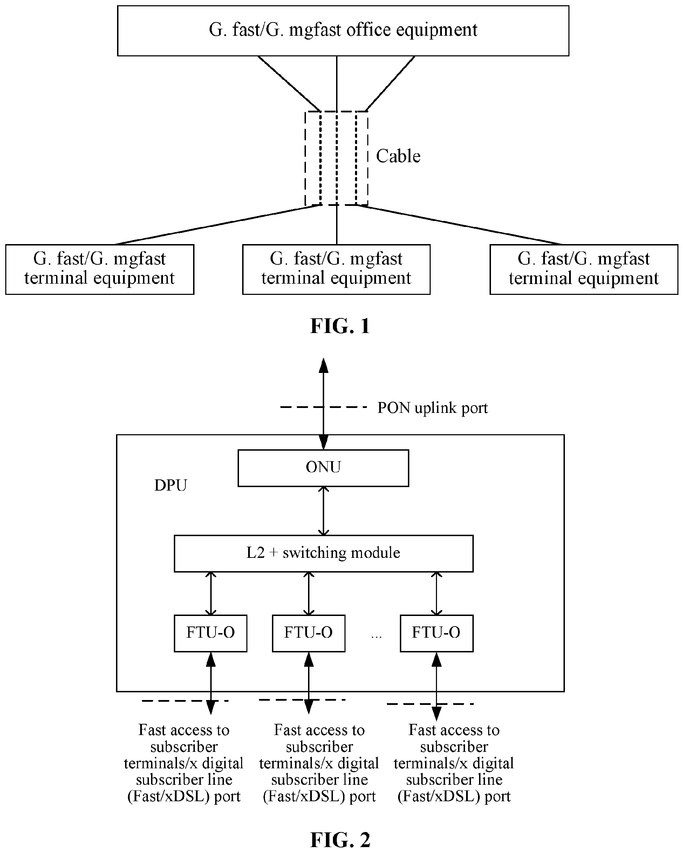

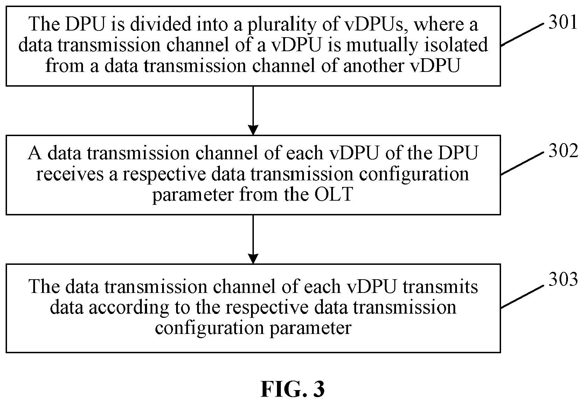

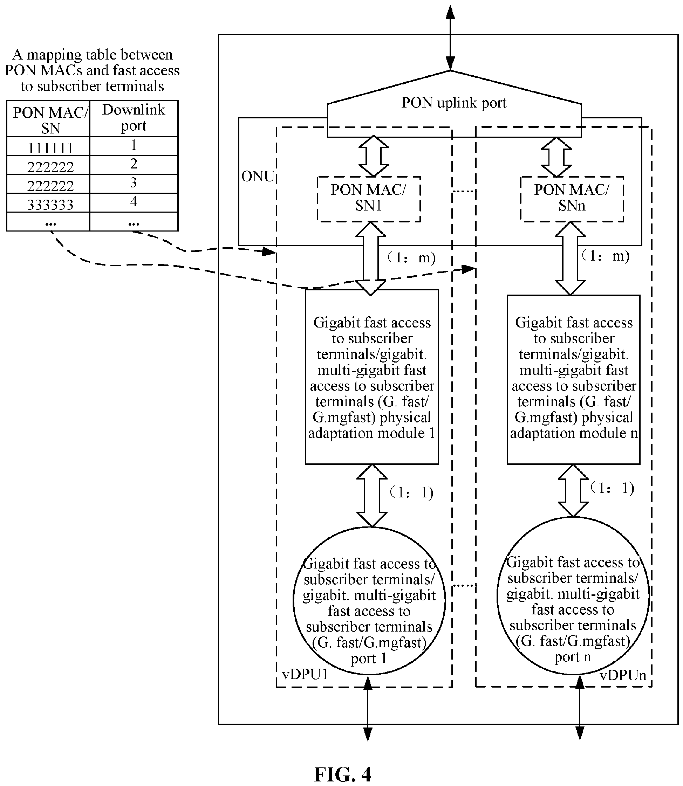

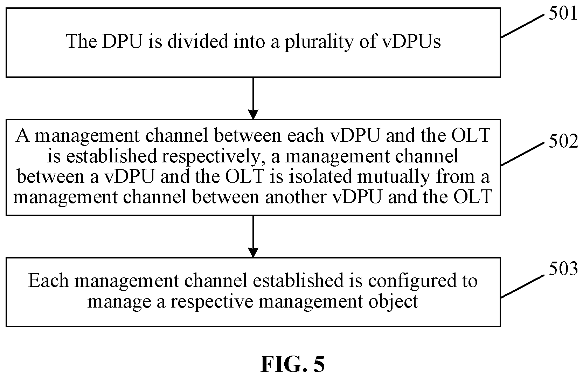

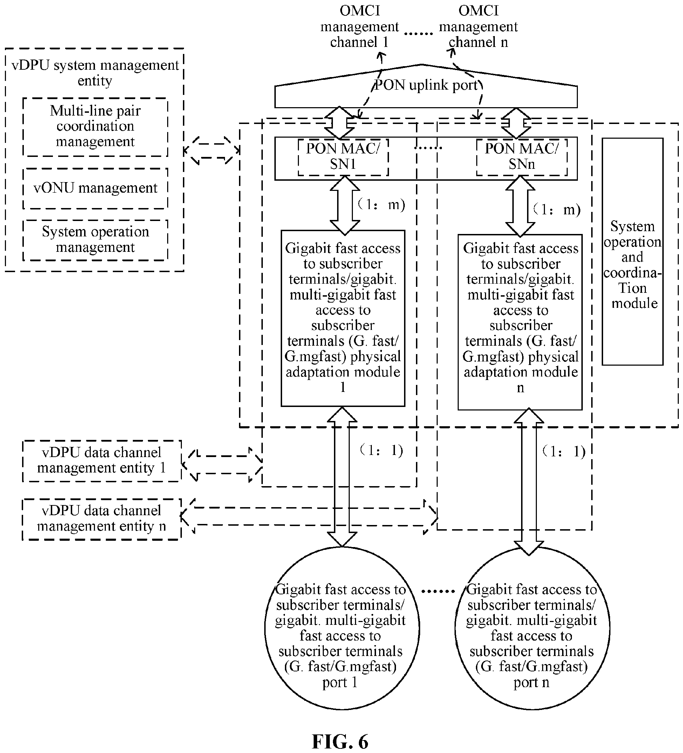

A copper cable access system includes a fast access to subscriber terminals, Fast, system and a second generation very-high-bit-rate digital subscriber loop, VDSL2, system. The Fast system includes a gigabit fast access to subscriber terminals, G. fast, system and a gigabit. multi-gigabit fast access to subscriber terminals, G. mgfast, system. Network architectures of the G. fast and G. mgfast may be divided into a Fast/x digital subscriber line, xDSL, office equipment, for example, a DPU, and a Fast/xDSL customer premise equipment, CPE. FIG. 1 is a schematic diagram illustrating a system architecture of a Fast/xDSL in the related art. As shown in FIG. 1, the Fast/xDSL office equipment DPU, may provide a subscriber terminal interface for connection to a plurality of customer premise equipments, CPEs. For example, the G. fast/G. mgfast office equipment may be connected to a plurality of G. fast/G. mgfast customer premise equipments via cables. Connection medium between interfaces corresponding to the Fast/xDSL office equipment and the Fast/xDSL customer premise equipment may be a copper cable medium such as a twisted pair, a coaxial cable and the like. When a plurality of twisted pairs coexist, a crosstalk phenomenon between pairs generally exists. Document "Architecture and Requirements for Fiber to the Distribution Point", Technical Report, TR -301, Forum Broadband, provides a Technical Report disclosing the architectural basis and technical requirements that are needed to deploy FTTdp (Fiber To The distribution point) within a TR-101 and/or TR-178 architecture. To this end a new node type, the DPU is defined (see Figures 5-2 and 5-3 and, in particular Fig. 6-1). This node, typically positioned at the Distribution Point (DP), supports one or more high-speed copper drops into the customer premises and uses a gigabit (or faster) fiber link to backhaul user data to a High Order Node (HON). The DPU with an integrated GPON backhaul could be realized as a single device that may be configured to operate in both Model 1 and Model 2 (see Figures 5.1 and 5.2) deployments. It is also likely that a DPU for Model 1 deployments could use an SEP to support both TR-167 compliant GPON and point-to-point Ethernet backhauls. This would then allow a single device to be used for both backhaul types, and for the migration between backhaul types after initial installation. CN 105790986 A discloses an optical network unit DPU device management method apparatus and system (see Figures 3 and 4), and specifically discloses establishing a specific service bearer channel between an optical line terminal,OLT, and an optical network unit DPU; a permanent management agent, PMA, of the OLT receiving a NETCONF configuration message from a configuration server, and sending a management message of a managed object to the DPU by means of the specific service bearer channel; and terminating the specific service bearer channel by means of the OLT and an optical network unit, ONU, which is an adjacent device of the OLT, wherein the OLT and the ONU separately extract a NETCONF message to a device management CPU. and the OLT and the ONU establish a transparent channel for bearing a NETCONF protocol.

In general, one DPU is uniformly managed by a same operator, which manages an uplink port and all downlink ports of the DPU uniformly. However, when a DPU is required to provide access services to a plurality of operators simultaneously, that is, different ports are wholesale for different operators, and different ports have to be managed by making them to belong to different operators. As a result, the isolation among resources managed by a plurality of operators is difficult to be ensured through a management method in the related art.

### SUMMARY

Embodiments of the present invention provide a data communication method and a communication management method based on a distribution point unit, DPU, and a DPU, which may independently transmit data or manage communication on different ports of the DPU respectively, so that in a case where one DPU provides access services to a plurality of operators simultaneously, the isolation among resources managed by the plurality of operators is ensured.

An embodiment of the present invention provides a data communication method based on a DPU.

The data communication method includes steps described below.

The DPU is divided into a plurality of virtual distribution point units, vDPUs, where a data transmission channel of a vDPU is mutually isolated from a data transmission channel of another vDPU.

A data transmission channel of each vDPU of the DPU receives a respective data transmission configuration parameter from the optical line terminal, OLT.

The data transmission channel of each vDPU transmits data according to the respective data transmission configuration parameter.

An embodiment of the present invention further provides a communication management method based on a DPU. The communication management method includes steps described below.

The DPU is divided into a plurality of vDPUs.

A management channel between each vDPU and the OLT is established respectively, a management channel between an vDPU and the OLT is isolated from a management channel between another vDPU and the OLT mutually. the management channel established is configured to manage a respective management object.

An embodiment of the present invention further provides a DPU. The DPU includes a plurality of vDPUs divided therefrom, a data transmission channel of a vDPU is mutually isolated from a data transmission channel of another vDPU; and the data transmission channel of each vDPU of the DPU is configured to receive a respective data transmission configuration parameter from the OLT and to transmit data according to the respective data transmission configuration parameter.

An embodiment of the present invention further provides another DPU, and the another DPU includes a plurality of vDPUs divided therefrom, where a management channel is established between each vDPU and the OLT respectively, a management channel between a vDPU and the OLT is mutually isolated from a management channel between another vDPU and the OLT; and the management channel between each vDPU and the OLT is configured to manage a respective management object.

According to the data communication method based on a DPU and a DPU provided by the embodiment of the present invention, the DPU is divided into a plurality of vDPUs, and a data transmission channel of a vDPU is mutually isolated from a data transmission channel of another vDPU; the data transmission channel of each vDPU of the DPU receives a respective data transmission configuration parameter from the OLT; and the data transmission channel of each vDPU transmits data according to the respective data transmission configuration parameter. In this way, when the data transmission channel of each vDPU is configured to transmit data according to a preconfigured data transmission configuration parameter, data may be transmitted independently through different ports of the DPU, so that in a case where one DPU provides access services to a plurality of operators simultaneously, the isolation among resources managed by the plurality of operators is ensured.

According to the communication management method base on a DPU and a DPU provided by the embodiment of the present invention, the DPU is divided into a plurality of vDPUs; a management channel between each vDPU and the OLT is established respectively, a management channel between a vDPU and the OLT is isolated mutually from a management channel between another vDPU and the OLT; and each management channel established is configured to manage a respective management object. In this way, when management channels mutually isolated are configured to manage management objects, communication management on the respective management object may be performed independently, so that in a case where one DPU provides access services to a plurality of operators simultaneously, the isolation among resources managed by the plurality of operators is ensured.

### BRIEF DESCRIPTION OF DRAWINGS

FIG. 1 is a schematic diagram illustrating a system architecture of a Fast/xDSL in the related art;
FIG. 2 is a structural diagram of a DPU according to an embodiment of the present invention;
FIG. 3 is a flowchart of a data communication method based on a DPU according to an embodiment of the present invention;
FIG. 4 is a schematic diagram illustrating a system architecture of a DPU based on vDPUs according to an embodiment of the present invention;
FIG. 5 is a flowchart of a communication management method based on a DPU according to an embodiment of the present invention; and
FIG. 6 is a schematic diagram illustrating a system management architecture of a DPU device based on vDPUs according to an embodiment of the present invention.

### DETAILED DESCRIPTION

The present invention is further described below in detail in conjunction with the drawings and embodiments. It should be understood that the embodiments described herein are intended to explain the present invention rather than to limit the present invention. Embodiments 2 to 6 do not fall within the scope of the claims but are considered as useful for understanding the invention.

FIG. 2 is a structural diagram of a DPU according to an embodiment of the present invention. As shown in FIG. 2, a DPU with a passive optical network, PON, uplink port is generally composed of one physical optical network unit, ONU, entity with a PON uplink port, a plurality of fast transceiver units on a network side, FTUs-O, and a L2 + (layer 2 and above) switching module, each FTU-O provides one downlink port of the DPU to the external, and the downlink port may be a Fast port or a digital subscriber line, DSL, port.

Based on the DPU described above, the embodiments below are provided.

### Embodiment one

An embodiment of the present invention provides a data communication method based on a DPU.

FIG. 3 is a flowchart of a data communication method based on a DPU according to an embodiment of the present invention. As shown in FIG. 3, the process may include the steps described below.

In step 301, the DPU is divided into a plurality of virtual DPUs, vDPUs, of an office equipment, where a data transmission channel of a vDPU is mutually isolated from a data transmission channel of another vDPU.

Herein, the DPU includes a plurality of virtual optical network units, vONUs, derived based on a physical ONU entity and a plurality of FTU-Os; in practical application, a physical ONU entity may be logically divided into a plurality of vONUs.

Herein, a correspondence (a mapping relationship) may be established between each vONU and each FTU-O downlink port. Each FTU-O downlink port corresponds to one vONU. For each vONU of the DPU, one vONU may correspond to one FTU-O downlink port or to a plurality of FTU-O downlink ports, and one vONU may not correspond to any FTU-O downlink port.

Further, vDPUs may further be constructed according to the vONU and the FTU-O downlink port. Herein, a vDPU is logically a virtual distribution point unit composed of one vONU and one downlink port or a plurality of downlink ports corresponding to the one vONU.

In the embodiment of the present invention, a data transmission channel is formed between each FTU-O downlink port and a corresponding vONU, and the data transmission channel between each FTU-O downlink port and the corresponding vONU is a data transmission channel of a vDPU. Specifically, a PON media access control, MAC, layer is configured in each vONU, and a correspondence formed between each FTU-O downlink port and the corresponding vONU is a correspondence formed between each FTU-O downlink port and the PON MAC configured in the corresponding vONU. Therefore, each FTU-O downlink port (which may be a DSL/G. fast/G. mgfast port) belongs to one of the plurality of vONUs with respective PON MACs of the DPU and forms an independent data transmission channel with a respective vONU, that is, a vDPU is formed by a vONU and a corresponding downlink port.

Herein, a data transmission channel corresponding an FTU-O is mutually independent from a data transmission channel corresponding another FTU-O, and the independence thereof lies in that the data transmission channel corresponding to each FTU-O is configured with a respective data transmission configuration parameter, that is, the data transmission channel of each vDPU is configured with a respective data transmission configuration parameter.

For the implementation of the DPU described above, in one example, the DPU described above may be a device with a PON uplink port, that is, in the DPU described above, the physical ONU entity is configured with the uplink port of the DPU. Each FTU-O downlink port is a DSL port or a Fast port.

In step 302, a data transmission channel of each vDPU of the DPU receives a respective data transmission configuration parameter from the OLT.

In practical implementation, the data transmission configuration parameter may include at least one of: a bandwidth allocation parameter, a transmission container, T-CONT, allocation parameter, and a quality of service, QoS, configuration parameter.

For the implementation of the step, in one example, after a case where an i-th vONU sends a registration request to the OLT through the uplink port, where i represents a positive integer, a data transmission configuration parameter of a data transmission channel of an i-th vDPU is received from the OLT. Specifically, after a case where the i-th vONU has been successfully registered by sending a registration request, the data transmission configuration parameter configured for the data transmission channel of the i-th vDPU may be obtained.

In practical application, a vONU of a vDPU determines whether to start a registration online process and sends a registration request (including a serial number, SN, of an identification the vONU) to the optical line terminal, OLT, after determining to start the registration online process, and the OLT processes the registration request and determines whether to allow the vONU to be registered online.

Each vONU which has been successfully registered is configured with a complete PON service configuration parameter set including an ONU_ID, an OMCI_GEM_Port, a plurality of GEM_Ports, a plurality of T-CONTs (Allo_ID), etc. The PON service configuration parameter set is used to support transceiving of management/service data related to the vDPU on a gigabit-capable passive optical network, GPON, uplink port. Thus, through a mapped vONU, a data communication channel is established between the downlink port and the DPU uplink port, and the downlink ports mapped to different vONUs are configured with mutually independent data channels.

The implementation of constructing an architecture of a vDPU system and data transmission channels of the vDPU system is illustratively described below.

In the embodiment of the present invention, the main principle of the vDPU is that, for the DPU with a PON uplink port, in the physical ONU entity, a plurality of PON MACs (note: each PON MAC has a respective SN) are formed; through the PON MACs and the downlink ports, a mapping table is established; and a correspondence between each downlink port (for example, a DSL/G. fast/G. mgfast port) and the PON MACs is established, so that each downlink port belongs to one of the plurality of vONUs in the DPU, where each vONU is configured with a respective PON MAC, and independent data transmission channels are formed through respective vONUs. The independence lies in that each data transmission channel has a respective data transmission configuration parameter.

FIG. 4 is a schematic diagram illustrating a system architecture of a DPU based on vDPUs according to an embodiment of the present invention. As shown in FIG. 4, the DPU with PON uplink ports is logically divided into a plurality of vDPUs. In FIG. 4, the plurality of vDPUs are labeled as vDPU1 to vDPUn, where n is an integer greater than 1. Each vDPU is mainly composed of a PON MAC (with an SN of the PON MAC), one or a plurality of DSL/G. fast/G. mgfast ports which the PON MAC belongs to, a corresponding G. fast/G. mgfast physical adaptation module and the like. The PON MAC of the vDPU1 is labeled as PON MAC/SN1, the G. fast/G. mgfast port of the vDPU1 is labeled as G. fast/G. mgfast port 1, and the G. fast/G. mgfast physical adaptation module of the vDPU1 is labeled as G. fast/G. mgfast physical adaptation module 1; the PON MAC of the vDPUn is labeled as PON MAC/SNn, the G. fast/G. mgfast port of the vDPUn is labeled as G. fast/G. mgfast port n, and the G. fast/G. mgfast physical adaptation module of the vDPUn is labeled as G. fast/G. mgfast physical adaptation module n; a data transmission channel of a vDPU is mutually isolated from a data transmission channel of another vDPU, and it is not necessary to forward data according to an MAC address table in the related art; and FIG. 4 further illustrates a mapping table between the PON MACs and the downlink ports.

In the embodiment of the present invention, in a case after a system software of the DPU starts the online registration action of a certain vDPU, the PON MAC uses configuration data (for example, a vDPU_GPON MAC, a vDPU_SN and the like) of an enabled virtual port (that is, a vDPU of the DPU) to complete the registration process of the vDPU on a GPON uplink port by using corresponding authentication data according to a DPU authentication mode configured on the OLT. Meanwhile, the PON MAC acquires data such as an ONU_ID, an Allo-ID, an OMCI GEM_Port_ID and the like which are allocated to the vDPU from the OLT, and informs the system software the data thereof, or, provides the data thereof to the system software for query. Meanwhile, a correspondence between the PON MAC of each vDPU and the G. fast/G. mgfast port of each vDPU is established through a mapping table between the PON MACs and the downlink ports.

In step 303, the data transmission channel of each vDPU transmits data according to the respective data transmission configuration parameter.

It may be understood that the data transmission channel of each respective vDPU is configured with a respective data transmission configuration parameter, that is, the corresponding data transmission channel may be independently configured with a data transmission configuration parameter, such that when the data transmission channel of each vDPU transmits data according to the respective data transmission configuration parameter, the data may be transmitted independently through different ports of the DPU, respectively. Therefore, in a case where one DPU provides access services to a plurality of operators simultaneously, the isolation among resources managed by the plurality of operators is ensured.

An embodiment of the present invention provides a communication management method based on a DPU. FIG. 5 is a flowchart of a communication management method based on a DPU according to an embodiment of the present invention. As shown in FIG. 5, the process may include the steps described below.

In step 501, the DPU is divided into a plurality of virtual DPUs, vDPUs, of an optical line terminal.

The implementation of the step has been described in step 301 and will not be repeated herein.

In step 502, a management channel between each vDPU and the OLT is established respectively, a management channel between a vDPU and the OLT is isolated mutually from a management channel between another vDPU and the OLT.

In practical application, the management channel described above may be an ONU management and control interface, OMCI, channel or other channels.

In the embodiment of the present invention, the management channel between each vDPU and the OLT may be labeled as a vDPU management channel, and different vDPU management channels represent management channels between different vDPUs and the OLT. As can be seen, the communication management on the DPU may be achieved through the management on the plurality of the vDPU management channels which are mutually isolated. Specifically, data transmission and service access of the DSL/G. fast/G. mgfast port may be managed through the vDPU management channels which are mutually isolated, in which the isolation of the management channels lies in that an object managed by each management channel are mutually invisible and unconfigurable.

In step 503, a respective management object is managed through each management channel which is established.

In practical application, a management object, as a management object for a corresponding FTU-O downlink port, is preconfigured for a management channel between each vDPU and the OLT.

Herein, a management object may be configured independently for a management channel between each vDPU and the OLT. In an embodiment, the management object configured for the management channel between each vDPU and the OLT may be a pre-authorized management object (that is, the management object is authorized to a corresponding management channel for management). For example, the management object for the management channel between each vDPU and the OLT may include a corresponding FTU-O downlink port.

Further, a system-level management object of the DPU may be managed based on a predetermined system management channel.

The system management channel herein is a predesignated management channel. The system management channel may be one of: a management channel between a vDPU corresponding to any FTU-O downlink port and the OLT, a management channel between a vONU satisfying a setting condition and the OLT, and an internet protocol, IP, system management channel of the DPU device, where the setting condition is: a vONU does not correspond to any FTU-O downlink port.

The aforementioned system-level management object may include at least one of: a system operation management object of the DPU, a multi-line pair coordination management object of the DPU, and a management object related to a vDPU.

Exemplarily, the system operation management object of the DPU includes at least one of: temperature, power supply, restarting, system version, environmental monitoring, fan, battery, and information related to energy-saving. The multi-line pair coordination management object of the DPU includes at least one of: vectoring information, dynamic time assignment, DTA, discontinuous operation, DO, and profile coordination control information. The management object related to a vDPU includes at least one of: vDPU enable, 1:1 mapping and 1:m mapping, vONU channel opening and closing, and a PON-related parameter. Herein, the PON-related parameter includes, but is not limited to: an SN corresponding to each vONU, a bandwidth allocation parameter, a T-CONT allocation parameter, and a QoS configuration parameter.

In a specific example, the system management channel may be a system management channel allocated and designated by the OLT. In this way, the vONU may use the OMCI channel , the OMCI channel is allocated and designated by the OLT. Through the system management channel, the vONU may transmit and receive an OMCI protocol message to and from the OLT, so as to establish an OMCI management channel between the vDPU and the OLT, and each vONU manages downlink ports mapped through a respective OMCI management channel. Therefore, communication management on the downlink ports is achieved by managing through a respective OMCI management channel to which the downlink ports belong, so that isolation among the management channels is achieved.

The system management channel may be selected according to any one of the following methods: 1) selecting a vDPU management channel corresponding to a certain DSL/G. fast/G. mgfast port as the system management channel (an OMCI channel); 2) selecting a vONU management channel (an OMCI channel) that does not correspond to any DSL/G. fast/G. mgfast port as the system management channel; 3) selecting an IP system management channel as the system management channel. Herein, the IP system management channel may be a simple network management protocol, SNMP, channel, a remote terminal protocol (TELNET) channel, or a NETCONF channel.

Further, after an OMCI management channel corresponding to each vDPU is determined, management authority of each OMCI management channel may further be determined. A non-system-level OMCI management channel, to which each downlink port belongs, is only allowed to configure and manage a management object of the downlink port and is not allowed to manage a system-level management object.

FIG. 6 is a schematic diagram illustrating a system management architecture of a DPU device based on vDPUs according to an embodiment of the present invention. As shown in FIG. 6, management on the DPU based on vDPUs mainly includes system-level management on the vDPU and management on data management channels of each vDPU; and the system-level management on the vDPU may be achieved through the system management channel described above. In FIG. 6, a management object of the system management channel is referred to as a vDPU system management entity. Each vDPU data management channel is a management channel between each vDPU described above and the OLT, which corresponds to the OMCI management channel 1 to the OMCI management channel n in FIG. 6, where a management object of the OMCI management channel 1 is referred to as vDPU data channel management entity 1, and a management object of the OMCI management channel n is referred to as vDPU data channel management entity n. In FIG. 6, a DPU with PON uplink ports is logically divided into a plurality of vDPUs, each vDPU corresponds to an OMCI management channel, and each vDPU is mainly composed of a PON MAC (with an SN of the PON MAC), one or a plurality of DSL/G. fast/G. mgfast ports which the PON MAC belongs to, a corresponding G. fast/G. mgfast physical adaptation module and the like. The PON MAC of the OMCI management channel 1 is labeled as PON MAC/SN1, the G. fast/G. mgfast port of the OMCI management channel 1 is labeled as G. fast/G. mgfast port 1, and the G. fast/G. mgfast physical adaptation module of the OMCI management channel 1 is labeled as G. fast/G. mgfast physical adaptation module 1; the PON MAC of the OMCI management channel n is labeled as PON MAC/SNn, the G. fast/G. mgfast port of the OMCI management channel n is labeled as G. fast/G. mgfast port n, and the G. fast/G. mgfast physical adaptation module of the OMCI management channel n is labeled as G. fast/G. mgfast physical adaptation module n. In FIG. 6, a system operation and coordination module is configured to configure a system operation parameter of the DPU and to achieve coordination between various modules of the DPU.

It may be understood that in the embodiment of the present invention, for an application scenario in which one DPU provides access services to a plurality of operators simultaneously, (i.e., different subscriber ports are wholesale to different operators), different downlink ports may be managed by making different downlink ports belong to different operators. According to the data communication method and the communication management method based on vDPNs, the isolation of data communication and communication management between ports belonging to different operators is ensured.

### Embodiment two

To further embody the purpose of the present invention, a further illustration is provided on the basis of Embodiment one of the present invention.

An embodiment provides a data communication and communication management method based on a DPU. The specific process may include the steps described below. In step A1, a vONU of a vDPU determines whether to start a registration online process and sends a registration request (including an SN of the vONU) to the OLT after determining to start the registration online process, and the OLT processes the registration request and determines whether to allow the vONU to register online.

In step A2, each vONU registered successfully has a complete PON service configuration parameter set (including an ONU_ID, an OMCI_GEM_Port, a plurality of GEM Ports, a plurality of T-CONTs (Allo_ID), etc.), to support transceiving of management/service data related to the vDPU on a GPON uplink port. Thus, through a mapped vONU, a data transmission channel is established between the downlink port and the DPU uplink port, and the downlink ports mapped to different vONUs have mutually independent data transmission channels.

In step A3, the vONU may use the OMCI channel, the OMCI channel is allocated and designated by the OLT. Through the system management channel, the vONU may transmit and receive an OMCI protocol message to and from the OLT, so as to establish an OMCI management channel between the vDPU and the OLT, and each vONU manages downlink ports mapped through a respective OMCI management channel. Therefore, communication management on the downlink ports is achieved by managing through a respective OMCI management channel to which the downlink ports belong, so that isolation among the management channels is achieved.

For the implementation of establishing a system-level management channel of the DPU, a vDPU management channel corresponding to a certain DSL/G. fast/G. mgfast port may be used as the system-level management channel (an OMCI management channel), and a system-level management object is managed through the system-level management channel.

In step A4, management authority of each OMCI management channel is determined. A non-system-level OMCI management channel to which each downlink port belongs is only allowed to configure and manage a management object of the downlink port and is not allowed to manage the system-level management object.

### Embodiment three

To further embody the purpose of the present invention, a further illustration is provided on the basis of Embodiment one of the present invention.

An embodiment provides a data communication and communication management method based on a DPU. The specific process may include the steps described below.

In step B 1, a vONU of a vDPU determines whether to start a registration online process and sends a registration request (including an SN of the vONU) to the OLT after determining to start the registration online process, and the OLT processes the registration request and determines whether to allow the vONU to register online.

In step B2, each vONU registered successfully has a complete PON service configuration parameter set (including an ONU_ID, an OMCI_GEM_Port, a plurality of GEM Ports, a plurality of T-CONTs (Allo_ID), etc.) to support transceiving of management/service data related to the vDPU on a GPON uplink port. Thus, through a mapped vONU, a data transmission channel is established between the downlink port and the DPU uplink port, and the downlink ports mapped to different vONUs have mutually independent data transmission channels.

In step B3, the vONU may use the OMCI channel, the OMCI channel is allocated and designated by the OLT. Through the system management channel, the vONU may transmit and receive an OMCI protocol message to and from the OLT, so as to establish an OMCI management channel between the vDPU and the OLT, and each vONU manages downlink ports mapped through a respective OMCI management channel. Therefore, communication management on the downlink ports is achieved by managing through a respective OMCI management channel to which the downlink ports belong, so that isolation among the management channels is achieved.

For the implementation of establishing a system-level management channel of the DPU, a vONU management channel (an OMCI management channel) that does not correspond to any DSL/G. fast/G. mgfast port may be used as the system-level management channel, and a system-level management object is managed through the system-level management channel.

In step B4, management authority of each OMCI management channel is determined. A non-system-level OMCI management channel to which each downlink port belongs is only allowed to configure and manage a management object of the downlink port and is not allowed to manage the system-level management object.

### Embodiment four

To further embody the purpose of the present invention, a further illustration is provided on the basis of Embodiment one of the present invention.

An embodiment provides a data communication and communication management method based on a DPU. The specific process may include the steps described below.

In step C1, a vONU of a vDPU determines whether to start a registration online process and sends a registration request (including an SN of the vONU) to the OLT after determining to start the registration online process, and the OLT processes the registration request and determines whether to allow the vONU to register online.

In step C2, each vONU registered successfully has a complete PON service configuration parameter set (including an ONU_ID, an OMCI_GEM_Port, a plurality of GEM Ports, a plurality of T-CONTs (Allo_ID), etc.) to support transceiving of management/service data related to the vDPU on a GPON uplink port. Thus, through a mapped vONU, a data transmission channel is established between the downlink port and the DPU uplink port, and the downlink ports mapped to different vONUs have mutually independent data transmission channels.

In step C3, the vONU may use the OMCI channel, the OMCI channel is allocated and designated by the OLT. Through the system management channel, the vONU may transmit and receive an OMCI protocol message to and from the OLT, so as to establish an OMCI management channel between the vDPU and the OLT, and each vONU manages downlink ports mapped through a respective OMCI management channel. Therefore, communication management on the downlink ports is achieved by managing through a respective OMCI management channel to which the downlink ports belong, so that isolation among the management channels is achieved.

For the implementation of establishing a system-level management channel of the DPU, an IP system management channel may be used as the system-level management channel (an OMCI management channel), and a system-level management object is managed through the system-level management channel.

In step C4, management authority of each OMCI management channel is determined. A non-system-level OMCI management channel to which each downlink port belongs is only allowed to configure and manage a management object of the downlink port and is not allowed to manage the system-level management object.

### Embodiment five

Based on the content of the preceding embodiments, an embodiment of the present disclosure further provides a DPU. The DPU includes a plurality of vDPUs divided therefrom, a data transmission channel of a vDPU is mutually isolated from a data transmission channel of another vDPU; and a data transmission channel of each vDPU of the DPU is configured to receive a respective data transmission configuration parameter from the OLT and to transmit data according to the respective data transmission configuration parameter.

In an implementation, the data transmission configuration parameter includes at least one of: a bandwidth allocation parameter, a T-CONT allocation parameter, and a QoS configuration parameter.

In an implementation, the DPU includes a plurality of vONUs derived based on a physical ONU entity and a plurality of FTUs-O. Each FTU-O downlink port corresponds to one vONU. Each vDPU includes one vONU and one or a plurality of FTU-O corresponding to the one vONU, and a data transmission channel of each vDPU is a data transmission channel between an FTU-O downlink port and a corresponding vONU.

In an implementation, each FTU-O downlink port is a DSL port or a Fast port.

In an implementation, the physical ONU entity has an uplink port of the DPU.

In an implementation, the data transmission channel of each vDPU of the DPU is specifically configured to, after a case where an i-th vONU sends a registration request to the OLT through the uplink port, where i represents a positive integer, a data transmission configuration parameter of a data transmission channel of an i-th vDPU is received from the OLT.

In an implementation, a PON MAC is configured in each vONU, and a correspondence between each FTU-O downlink port and a respective vONU is a correspondence between each FTU-O downlink port and the PON MAC configured in the respective vONU.

### Embodiment six

Based on the content of the preceding embodiments, an embodiment of the present invention provides another DPU. The DPU includes a plurality of vDPUs divided therefrom, and a management channel is established between each vDPU and the OLT respectively, a management channel between a vDPU and the OLT is mutually isolated from a management channel between another vDPU and the OLT; and each management channel between each vDPU and the OLT is configured to manage a respective management object.

In an implementation, the management channel is an OMCI channel.

In an implementation, the DPU includes a plurality of vONUs derived based on a physical ONU entity and a plurality of FTU-Os. Each FTU-O downlink port corresponds to one vONU. Each vDPU includes one vONU and one or a plurality of FTUs-O corresponding to the one vONU.

In an implementation, a management object configured for a management channel between each vDPU and the OLT is a management object of a corresponding FTU-O downlink port.

In an implementation, a system management channel predetermined for the DPU is configured to manage a system-level management object of the DPU.

In an implementation, the system management channel includes one of: a management channel between a vDPU corresponding to any FTU-O downlink port and the OLT, a management channel between a vONU satisfying a setting condition and the OLT, and an IP system management channel of the DPU; and the setting condition is: a vONU does not correspond to any FTU-O downlink port.

In an implementation, the system-level management object includes at least one of: a system operation management object of the DPU, a multi-line pair coordination management object of the DPU, and a management object related to a vDPU.

It should be understood by those skilled in the art that the embodiments of the present disclosure may be provided as methods, systems or computer program products. Therefore, the present disclosure may adopt a hardware embodiment, a software embodiment, or a combination of a hardware embodiment and a software embodiment. In addition, the present disclosure may adopt the form of a computer program product implemented on one or more computer-usable storage medium (including, but not limited to, a disk memory, an optical memory, and etc.) that include computer-usable program codes.

The present invention is described with reference to flowcharts and/or block diagrams of methods, devices (systems) and computer program products according to the embodiment 1 and embodiments 2 to 6 not falling within the scope of the appended claims but considered as useful for understanding the invention. It should be understood that computer program instructions may implement each process and/or block in the flowcharts and/or the block diagrams and a combination of processes and/or blocks in the flowcharts and/or the block diagrams. These computer program instructions may be provided for a general-purpose computer, a special-purpose computer, an embedded processor or a processor of another programmable data processing device to produce a machine so that instructions executed by the computer or the processor of another programmable data processing device produce a device for implementing functions designated in one or more processes in the flowcharts and/or one or more blocks in the block diagrams.

These computer program instructions may also be stored in a computer-readable memory that can cause the computer or another programmable data processing device to operate in a particular manner so that the instructions stored in the computer-readable memory produce a manufactured product including an instructing device. The instructing device implements the functions designated in the one or more processes in the flowcharts and/or the one or more blocks in the block diagrams.

These computer program instructions may be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more processes in the flowcharts and/or the one or more blocks in the block diagrams.

## Claims

1. A data communication method based on a distribution point unit, DPU, comprising:
dividing (301) the DPU into a plurality of virtual DPUs, vDPUs, wherein a data transmission channel of a vDPU is mutually isolated from a data transmission channel of another vDPU;
receiving (302), by the data transmission channels of the plurality of vDPUs of the DPU, a respective data transmission configuration parameter from the OLT; and
transmitting data (303), by the data transmission channels of the plurality of vDPUs, according to the respective data transmission configuration parameter.

2. The method according to claim 1, wherein the data transmission configuration parameter comprises at least one of: a bandwidth allocation parameter, a transmission container, T-CONT, allocation parameter, and a quality of service, QoS, configuration parameter.

3. The method according to claim 1 or 2, wherein the DPU comprises a plurality of virtual optical network units, vONUs, derived based on a physical optical network unit, ONU, entity and a plurality of fast transceiver units, FTUs-O; each FTU-O downlink port corresponds to one vONU, each vDPU comprises one vONU and one FTU-O or a plurality of FTU-Os corresponding to the one vONU, and a data transmission channel of each vDPU is a data transmission channel between an FTU-O downlink port and a corresponding vONU.

4. The method according to claim 3, wherein each FTU-O downlink port is a digital subscriber line, DSL, port or a fast access subscriber terminal, Fast, port.

5. The method according to claim 3, wherein the physical ONU entity comprises an uplink port of the DPU.

6. The method according to claim 5, wherein receiving, by the data transmission channels of the plurality of vDPUs of the DPU, the respective data transmission configuration parameter from the OLT, comprises:
after a case where an i-th vONU sends a registration request to the OLT through the uplink port, receiving, by the data transmission channels of the plurality of vDPUs of the DPU, a data transmission configuration parameter of a data transmission channel of an i-th vDPU from the OLT, wherein i represents a positive integer.

7. A communication management method based on a distribution point unit, DPU, of an office equipment, comprising:
dividing (501) the DPU into a plurality of virtual DPUs, vDPUs, of the office equipment;
establishing (502) a plurality of management channels between the plurality of vDPUs and the OLT respectively, a management channel between a vDPU and the OLT is isolated mutually from a management channel between another vDPU and the OLT; and
managing (503), through the plurality of management channels which are established, a respective management object of the plurality of management channels.

8. The method according to claim 7, wherein the management channels are optical network unit management and control interface, OMCI, channels.

9. The method according to claim 7 or 8, wherein the DPU comprises a plurality of virtual optical network units, vONUs, derived based on a physical optical network unit, ONU, entity and a plurality of fast transceiver units, FTUs-O, each FTU-O downlink port correspond to one vONU, and each vDPU comprises one vONU and one FTU-O or a plurality of FTUs-O corresponding to the one vONU.

10. A distribution point unit, DPU, of an office equipment, comprising: a plurality of divided virtual DPUs, vDPUs, of the office equipment, a data transmission channel of a vDPU is mutually isolated from a data transmission channel of another vDPU; and the data transmission channels of the plurality of vDPUs of the DPU are configured to receive a respective data transmission configuration parameter from the OLT and to transmit data according to the respective data transmission configuration parameter.

11. The DPU according to claim 10, wherein the data transmission configuration parameter comprises at least one of: a bandwidth allocation parameter, a transmission container, T-CONT, allocation parameter, and a quality of service, QoS, configuration parameter.

12. The DPU according to claim 10 or 11, wherein the DPU comprises a plurality of virtual optical network units, vONUs, derived based on a physical optical network unit, ONU, entity and a plurality of fast transceiver units, FTUs-O; each FTU-O downlink port corresponds to one vONU, each vDPU comprises one vONU and one FTU-O or a plurality of FTUs-O corresponding to the one vONU, and a data transmission channel of each vDPU is a data transmission channel between a FTU-O downlink port and a corresponding vONU.

13. A distribution point unit, DPU, of an optical line terminal, OLT, comprising: a plurality of divided virtual DPUs, vDPUs, of the OLT, wherein a management channel is established between each of the plurality of vDPUs and the OLT respectively, a management channel between a vDPU and the OLT is mutually isolated from a management channel between another vDPU and the OLT; and a plurality of management channels between the plurality of vDPUs and the OLT are configured to manage a respective management object of the plurality of management channels.

14. The DPU according to claim 13, wherein the management channels are management and control interface, OMCI, channels of an optical network unit.

15. The DPU according to claim 13 or 14, wherein the DPU comprises a plurality of virtual optical network units, vONUs, derived based on a physical optical network unit, ONU, entity and a plurality of fast transceiver units, FTUs-O; each FTU-O downlink port corresponds to one vONU, and each vDPU comprises one vONU and one FTU-O or a plurality of FTUs-O corresponding to the one vONU.

## Patentansprüche

1. Ein Datenkommunikationsverfahren basierend auf einer Verteilerpunkteinheit (DPU) umfassend:
Unterteilung (301) der DPU in mehrere virtuelle DPUs (vDPUs), wobei ein Datenübertragungskanal einer vDPU gegenseitig von einem Datenübertragungskanal einer anderen vDPU isoliert ist
Empfang (302) eines jeweiligen Konfigurationsparameters der Datenübertragung von mehreren vDPUs der DPU durch die Datenübertragungskanäle vom OUT und
Übertragung von Daten (303) durch die Datenübertragungskanäle der mehreren vDPUs gemäß dem jeweiligen Konfigurationsparameter der Datenübertragung.

2. Verfahren nach Anspruch 1, wobei der Konfigurationsparameter der Datenübertragung wenigstens: einen Bandbreitenzuweisungsparameter, einen Übertragungscontainer (T-CONT), Zuordnungsparameter und einen QoS-Konfigurationsparameter (Quality of Service) umfasst.

3. Verfahren nach Anspruch 1 oder 2, wobei die DPU mehrere virtuelle optische Netzwerkeinheiten (vONUs) umfasst, die basierend auf einer physikalischen optischen Netzwerkeinheit (ONU) und mehreren schnellen Sendeempfängereinheiten (FTUs-O) abgeleitet werden und jeder FTU-O Downlink-Port einer vONU entspricht, jede vDPU eine vONU und eine FTU-O oder mehrere FTU-Os entsprechend der einen vONU umfasst, und ein Datenübertragungskanal jeder vDPU ein Datenübertragungskanal zwischen einem FTU-0 Downlink-Port und einer entsprechenden vONU ist.

4. Verfahren nach Anspruch 3, wobei jeder FTU-0 Downlink-Port ein Port für eine digitale Teilnehmerleitung (DSL) oder für ein Fast Access Subscriber Terminal (Fast) ist.

5. Verfahren nach Anspruch 3, wobei die physische ONU einen Uplink-Port der DPU umfasst.

6. Verfahren nach Anspruch 5, wobei das Empfangen des jeweiligen Konfigurationsparameter der Datenübertragung von dem OLT durch die Datenübertragungskanäle der mehreren vDPUs der DPU umfasst:
nach einem Fall, in dem eine i-te vONU eine Registrierungsanfrage über den Uplink-Port an den OLT sendet, der durch die Datenübertragungskanäle der mehreren vDPUs der DPU einen Konfigurationsparameter der Datenübertragung eines Datenübertragungskanals einer i-ten vDPU von dem OLT empfängt, wobei i eine positive Ganzzahl darstellt.

7. ein Kommunikationsverwaltungsverfahren, das auf einer Verteilungspunkteinheit (DPU) eines Bürogeräts basiert, umfassend:
Unterteilung (501) der DPU in mehrere virtuelle DPUs (vDPUs) des Bürogeräts
Einrichtung (502) mehrerer Verwaltungskanäle zwischen den mehreren vDPUs bzw. dem OLT, wobei ein Verwaltungskanal zwischen einer vDPU und dem OLT gegenseitig von einem Verwaltungskanal zwischen einer anderen vDPU und dem OLT isoliert ist; und
die Verwaltung (503) über die mehreren eingerichteten Verwaltungskanäle und ein jeweiliges Verwaltungsobjekt der mehreren Verwaltungskanäle erfolgt.

8. Verfahren nach Anspruch 7, wobei die Verwaltungskanäle optische Netzwerkeinheitsverwaltungs- und Steuerungsschnittstellen (OMCI) sind.

9. Verfahren nach Anspruch 7 oder 8, wobei die DPU mehrere virtuelle optische Netzwerkeinheiten (vONUs) umfasst, die basierend auf einer physikalischen optischen Netzwerkeinheit (ONU) und mehreren schnellen Sendeempfängereinheiten (FTUs-O) abgeleitet werden, wobei jeder FTU-O Downlink-Port einer vONU entspricht, und jede vDPU eine vONU und eine FTU-O oder mehrere FTUs-O umfasst, die der einen vONU entsprechen.

10. Eine Verteilerpunkteinheit (DPU) eines Bürogeräts, umfassend: mehrere geteilte virtuelle DPUs (vDPUs) des Bürogeräts, ein Datenübertragungskanal einer vDPU ist gegenseitig von einem Datenübertragungskanal einer anderen vDPU isoliert; und die Datenübertragungskanäle der mehreren vDPUs der DPU sind dazu eingerichtet, einen jeweiligen Konfigurationsparameter der Datenübertragung von dem OLT zu empfangen und Daten gemäß dem jeweiligen Konfigurationsparameter der Datenübertragung zu übertragen.

11. DPU nach Anspruch 10, wobei der Konfigurationsparameter der Datenübertragung wenigstens umfasst: einen Bandbreitenzuweisungsparameter, einen Übertragungscontainer (T-CONT), Zuordnungsparameter und einen QoS-Konfigurationsparameter (Quality of Service).

12. DPU nach Anspruch 10 oder 11, wobei die DPU mehrere virtuelle optische Netzwerkeinheiten (vONUs) umfasst, die auf einer physikalischen optischen Netzwerkeinheit (ONU) und mehreren schnellen Sendeempfängereinheiten (FTUs-O) basieren. Jeder FTU-0 Downlink-Port entspricht einer vONU, jede vDPU umfasst eine vONU und eine FTU-0 oder mehrere FTUs-O entsprechend der einen vONU, und ein Datenübertragungskanal jeder vDPU ist ein Datenübertragungskanal zwischen einem FTU-0 Downlink-Port und einer entsprechenden vONU.

13. Verteilungspunkteinheit (DPU) eines optischen Leitungsendgeräts (OLT) umfassend: mehrere geteilte virtuelle DPUs (vDPUs) des OLT, wobei zwischen jeder der mehreren vDPUs und dem OLT ein Verwaltungskanal eingerichtet ist, wobei ein Verwaltungskanal zwischen einer vDPU und dem OLT gegenseitig von einem Verwaltungskanal zwischen einer anderen vDPU und dem OLT isoliert ist, und mehrere Verwaltungskanäle zwischen den mehreren vDPUs und dem OLT dazu eingerichtet sind, ein jeweiliges Verwaltungsobjekt der mehreren Verwaltungskanäle zu verwalten.

14. DPU nach Anspruch 13, wobei die Verwaltungskanäle Verwaltungs- und Steuerungsschnittstellen (OMCI) einer optischen Netzwerkeinheit sind.

15. DPU nach Anspruch 13 oder 14, wobei die DPU mehrere virtuelle optische Netzwerkeinheiten (vONUs) umfasst, die auf einer physikalischen optischen Netzwerkeinheit (ONU) und mehreren schnellen Sendeempfängereinheiten (FTUs-O) abgeleitet sind; jeder FTU-O Downlink-Port entspricht einer vONU, und jede vDPU umfasst eine vONU und eine FTU-O oder mehrere FTUs-O, die der einen vONU entsprechen.

## Revendications

1. Procédé de communication de données basé sur une unité de point de distribution, DPU, comprenant :
la division (301) de la DPU en une pluralité de DPU virtuelles, vDPU, dans lequel un canal de transmission de données d'une vDPU est isolé mutuellement d'un canal de transmission de données d'une autre vDPU ;
la réception (302), par les canaux de transmission de données de la pluralité de vDPU de la DPU, d'un paramètre de configuration de transmission de données respectif en provenance de l'OLT ; et
la transmission (303) de données, par les canaux de transmission de données de la pluralité de vDPU, selon le paramètre de configuration de transmission de données respectif.

2. Procédé selon la revendication 1, dans lequel le paramètre de configuration de transmission de données comprend au moins l'un parmi : un paramètre d'allocation de bande passante, un paramètre d'allocation de contenant de transmission, T-CONT, et un paramètre de configuration de qualité de service, QoS.

3. Procédé selon la revendication 1 ou 2, dans lequel la DPU comprend une pluralité d'unités de réseau optique virtuelles, vONU, dérivées d'après une entité physique d'unité de réseau optique, ONU, et une pluralité d'unités d'émetteur-récepteur rapide, FTU-O ; chaque port de liaison descendante FTU-O correspond à une vONU, chaque vDPU comprend une vONU et une FTU-O ou une pluralité de FTU-O correspondant à la vONU, et un canal de transmission de données de chaque vDPU est un canal de transmission de données entre un port de liaison descendante FTU-0 et une vONU correspondante.

4. Procédé selon la revendication 3, dans lequel chaque port de liaison descendante FTU-0 est un port de ligne d'abonné numérique, DSL, ou un port de terminal d'abonné à accès rapide, Fast.

5. Procédé selon la revendication 3, dans lequel l'entité ONU physique comprend un port de liaison montante de la DPU.

6. Procédé selon la revendication 5, dans lequel la réception, par les canaux de transmission de données de la pluralité de vDPU de la DPU, du paramètre de configuration de transmission de données respectif en provenance de l'OLT, comprend :
après un cas où une ième vONU envoie une demande d'enregistrement à l'OLT par le biais du port de liaison montante, la réception, par les canaux de transmission de données de la pluralité de vDPU de la DPU, d'un paramètre de configuration de transmission de données d'un canal de transmission de données d'une ième vDPU en provenance de l'OLT, dans lequel i représente un nombre entier positif.

7. Procédé de gestion de communication basé sur une unité de point de distribution, DPU, d'un équipement de bureau, comprenant :
la division (501) de la DPU en une pluralité de DPU virtuelles, vDPU, de l'équipement de bureau ;
l'établissement (502) d'une pluralité de canaux de gestion entre la pluralité de vDPU et l'OLT respectivement, un canal de gestion entre une vDPU et l'OLT est isolé mutuellement d'un canal de gestion entre une autre vDPU et l'OLT ; et
la gestion (503), par le biais de la pluralité de canaux de gestion qui sont établis, d'un objet de gestion respectif de la pluralité de canaux de gestion.

8. Procédé selon la revendication 7, dans lequel les canaux de gestion sont des canaux d'interface de gestion et de commande d'unité de réseau optique, OMCI.

9. Procédé selon la revendication 7 ou 8, dans lequel la DPU comprend une pluralité d'unités de réseau optique virtuelles, vONU, dérivées d'après une entité physique d'unité de réseau optique, ONU, et une pluralité d'unités d'émetteur-récepteur rapide, FTU-O, chaque port de liaison descendante FTU-O correspond à une vONU, et chaque vDPU comprend une vONU et une FTU-O ou une pluralité de FTU-O correspondant à la vONU.

10. Unité de point de distribution, DPU, d'un équipement de bureau, comprenant : une pluralité de DPU virtuelles, vDPU, divisées de l'équipement de bureau, un canal de transmission de données d'une vDPU est mutuellement isolé d'un canal de transmission de données d'une autre vDPU ; et les canaux de transmission de données de la pluralité de vDPU de la DPU sont configurés pour recevoir un paramètre de configuration de transmission de données respectif en provenance de l'OLT et pour transmettre des données selon le paramètre de configuration de transmission de données respectif.

11. DPU selon la revendication 10, dans laquelle le paramètre de configuration de transmission de données comprend au moins l'un parmi : un paramètre d'allocation de bande passante, un paramètre d'allocation de contenant de transmission, T-CONT, et un paramètre de configuration de qualité de service, QoS.

12. DPU selon la revendication 10 ou 11, dans laquelle la DPU comprend une pluralité d'unités de réseau optique virtuelles, vONU, dérivées d'après une entité physique d'unité de réseau optique, ONU, et une pluralité d'unités d'émetteur-récepteur rapide, FTU-O ; chaque port de liaison descendante FTU-0 correspond à une vONU, chaque vDPU comprend une vONU et une FTU-0 ou une pluralité de FTU-O correspondant à la vONU, et un canal de transmission de données de chaque vDPU est un canal de transmission de données entre un port de liaison descendante FTU-0 et une vONU correspondante.

13. Unité de point de distribution, DPU, d'un terminal de ligne optique, OLT, comprenant : une pluralité de DPU virtuelles, vDPU, divisées de l'OLT, dans laquelle un canal de gestion est établi entre chacune de la pluralité de vDPU et l'OLT respectivement, un canal de gestion entre une vDPU et l'OLT est isolé mutuellement d'un canal de gestion entre une autre vDPU et l'OLT ; et une pluralité de canaux de gestion entre la pluralité de vDPU et l'OLT sont configurés pour gérer un objet de gestion respectif de la pluralité de canaux de gestion.

14. DPU selon la revendication 13, dans laquelle les canaux de gestion sont des canaux d'interface de gestion et de commande, OMCI, d'une unité de réseau optique.

15. DPU selon la revendication 13 ou 14, dans laquelle la DPU comprend une pluralité d'unités de réseau optique virtuelles, vONU, dérivées d'après une entité physique d'unité de réseau optique, ONU, et une pluralité d'unités d'émetteur-récepteur rapide, FTU-O ; chaque port de liaison descendante FTU-O correspond à une vONU, et chaque vDPU comprend une vONU et une FTU-O ou une pluralité de FTU-O correspondant à la vONU.
